# EUROPÄISCHE PATENTANMELDUNG

(11) **EP 4 135 170 A1**
(43) Veröffentlichungstag der Anmeldung: **15.02.2023**
(21) Anmeldenummer: 22187208.8
(22) Anmeldetag: 27.07.2022
(51) Int. Cl.: H02K 9/22, H02K 1/18, H02K 5/173, H02K 9/06, H02K 21/22

(54) **ELEKTROMOTOR MIT VERBESSERTER KÜHLUNG**

(30) Priorität: 09.08.2021 DE 102021120672
(71) Anmelder: ebm-papst Mulfingen GmbH & Co. KG, 74673 Mulfingen (DE)
(72) Erfinder: Häfner, Jochen, 74572 Blaufelden (DE); Müller, Werner, 74673 Mulfingen-Seidelklingen (DE); Nadig, Stephan, 74639 Zweiflingen-Pfahlbach (DE); Pollok, Erich, 97996 Niederstetten (DE); Sturm, Gerhard, 74673 Mulfingen (DE); Baun, Martin, 74673 Mulfingen (DE)
(74) Vertreter: Staeger & Sperling Partnerschaftsgesellschaft mbB

(57) **Zusammenfassung**

Die Erfindung betrifft einen Elektromotor (1), insbesondere Außenläufermotor, mit einem Stator (10) mit einem Statorpaket (11), einer drehfest angebrachten Welle (20), die sich in Axialrichtung (A) des Motors erstreckt und einer gegenüber der drehfesten Welle (20) rotierbar angeordneten Rotorglocke (30), wobei die Rotorglocke (30) ausgebildet mit Kühlrippen in offener, speichenförmiger Ausführung mittels wenigstens einem ersten statorseitigen Lagerschilds (31) drehbar an der Welle (20) gelagert ist und zwischen der Welle (20) und dem Statorpaket (11) eine diese verbindende Kühleinrichtung (40) angeordnet ist, welche bei Drehung des Motors im Betrieb eine Kühlung bewirkt, indem die Kühleinrichtung (40) hierzu eine Vielzahl von axialen Strömungsöffnungen (41) angeordnet in Umfangsrichtung aufweist.

## Beschreibung

Die Erfindung betrifft einen Elektromotor, insbesondere Außenläufermotor, mit einem Stator und einer gegenüber dem Stator rotierbaren Rotorglocke.

Bei schnelldrehenden Elektromotoren und grundsätzlich bei Außenläufermotoren mit einer verbesserten Motorausnutzung ist eine ausreichende Kühlung von großer Bedeutung. Insbesondere bei geschlossenen bzw. gekapselten Motorgehäusen hoher IP-Schutzart mit einem geschlossenen Statorgehäuse und sich unmittelbar daran axial anschließendem Außenläuferrotor bleibt nur ein geringer, üblicherweise über eine Labyrinthdichtung abgedichteter Ringspalt, in dem eine Kühlströmung zwischen Statorgehäuse und Außenläuferrotor erzeugt werden kann. Ein derartiger gattungsgemäßer Elektromotor ist in der DE 103 13 274 A1 offenbart.

Zur Kühlung sind im Stand der Technik für Außenläufermotoren weitere unterschiedlichste Kühlkonzepte bekannt.

Aus der DE 10 2015 118695 A1 ist zum Beispiel ein Elektromotor, insbesondere Außenläufermotor bekannt, mit einem Statorgehäuse und einem gegenüber dem Statorgehäuse rotierbare Rotorgehäuse, das auf seiner dem Statorgehäuse axial zuweisenden Seite einen Kühlring aufweist, wobei an dem Statorgehäuse und an dem Kühlring jeweils eine Vielzahl von axial zueinander weisenden, in Umfangsrichtung verteilt angeordneten und im Rotationsbetrieb des Rotorgehäuses jeweils strömungstechnisch zusammenwirkenden ersten und zweiten Kühlrippen vorgesehen sind, wobei in einer axialen Draufsicht die ersten Kühlrippen radial nach außen verlaufen und die zweiten Kühlrippen V-förmig ausgebildet sind und in Umfangsrichtung weisen, wobei eine rotierende Relativbewegung der ersten und zweiten Kühlrippen einen Kühlluftstrom zumindest zwischen dem Statorgehäuse und dem Rotorgehäuse erzeugt.

Es gibt ferner weitere jedoch völlig andersartige Kühlkonzepte, wie diese zum Beispiel aus der DE 10 2012 107107 A1 bekannt sind. Diese Druckschrift betrifft einen Motor, umfassend ein Elektronikgehäuse, einen Stator mit einer Statorbuchse und einen Rotor. Dieser Motor weist ein Luftleitelement und ein mit dem Rotor drehfest verbundenes Luftförderelement auf. Das Luftförderelement mündet mit einer Ansaugöffnung über einen Dichtspalt in einer rotorseitigen Durchströmöffnung des Luftleitelements, um den Motor zu kühlen.

Es besteht jedoch ein Bedürfnis, insbesondere bei Außenläufermotoren mit hohen Drehmomenten und hohen Drehzahlen ein optimiertes Gesamtmotorkonzept vorzusehen, so dass durch die Kühlung die Motorausnutzung optimiert werden kann, was mit sogenannten Standard-Außenläufermotoren mit einer rotierenden Rotorglocke mit den im Stand der Technik bekannten Maßnahmen nicht mehr effizient und wirtschaftlich realisiert werden kann.

Der Erfindung liegt daher die Aufgabe zugrunde, vorbesagte Nachteile im Stand der Technik zu überwinden und einen Elektromotor, insbesondere Au-βenläufermotor mit einer optimierten Motorausnutzung für hohe Drehmomente bereit zu stellen, dessen Kühlkonzept gleichzeitig verbessert ist.

Diese Aufgabe wird durch die Merkmalskombination gemäß Patentanspruch 1 gelöst.

Erfindungsgemäß wird hierzu ein Elektromotor, insbesondere Außenläufermotor vorgeschlagen, mit einem Stator mit einem Statorpaket, einer drehfest angebrachten Welle, die sich in Axialrichtung A des Motors erstreckt und einer gegenüber der drehfesten Welle rotierbar angeordneten Rotorglocke.

Die Rotorglocke ist mittels wenigstens einem ersten statorseitigen Lagerschilds drehbar an der Welle gelagert und zwischen der Welle und dem Statorpaket ist eine diese verbindende Kühleinrichtung angeordnet, welche bei Drehung des Motors im Betrieb eine Kühlung bewirkt, indem die Kühleinrichtung hierzu eine Vielzahl von axialen Strömungsöffnungen angeordnet in Umfangsrichtung aufweist.

Insofern sieht die Erfindung ein spezifisches Verbindungselement zwischen der Welle und dem Statorpaket vor und zwar mit großen Öffnungen für die Luftdurchströmung und Kühlung des Stators.

In einer weiteren bevorzugten Ausgestaltung der Erfindung ist vorgesehen, dass die Kühleinrichtung einen die Welle verbindenden inneren Ring sowie einen das Statorpaket verbindenden äußeren Ring aufweist und einstückig mit dem inneren Ring und dem äußeren Ring stegförmige sich in Radialrichtung erstreckende Verbindungsabschnitte ausbildet. Zwischen diesen Verbindungsabschnitten befinden sich die axialen Strömungsöffnungen.

Weiter vorteilhaft ist es, wenn die Verbindungsabschnitte einen zentralen Mittenabschnitt aufweisen, der jeweils in Umfangsrichtung breiter ist im Vergleich zur Breite in den benachbarten sich an diesen Mittenabschnitt jeweils beidseitig anschließende Stegabschnitte. Dies ist eine besonders wirkungsvolle und dennoch ausreichend stabile Konstruktion. Hierbei kann vorgesehen sein, dass die Querschnittsform eine im wesentlichen quadratische Grundform aufweist, deren Seitenkanten gebogen verlaufen mit ausgeprägten nasenförmig hervorstehenden Ecken.

In einer weiteren bevorzugten Ausführungsform der Erfindung ist vorgesehen, dass der Querschnitt der Strömungsöffnungen in Axialrichtung betrachtet größer ist, als der Querschnitt der radial zwischen den Strömungsöffnungen befindlichen Bereichen. Eine solche beispielhafte Gestaltung wird später bei der Beschreibung eines bevorzugten Ausführungsbeispiels der Erfindung näher gezeigt und beschrieben.

In einer ebenfalls bevorzugten Ausführungsform der Erfindung ist vorgesehen, dass die Rotorglocke ein zweites und zwar rotorseitiges Lagerschild entweder als separates Lagerschild oder integral mit der Rotorglocke ausbildet, mit dem die Rotorglocke an der Welle drehbar gelagert ist.

Dabei ist es von Vorteil, wenn das statorseitigen Lagerschilds mit Kühlflügeln ausgebildet ist, die sich als radial verlaufende Speichen zwischen einem zentralen Lagerabschnitt und einem radial weiter außen liegenden Lagerschildabschnitt erstrecken und zwischen den Speichen Öffnungen vorgesehen sind.

Es ist weiter in einer bevorzugten Ausgestaltung des erfinderischen Konzeptes vorgesehen, dass ein Statorflansch vorgesehen ist, an dem der Elektromotor oder der Stator gelagert ist und das statorseitigen Lagerschilds mit dem Statorflansch, insbesondere über eine Labyrinthdichtung verbunden ist.

Anders ausgedrückt stehen folgende konstruktive bevorzugte Lösungen zur Verfügung. Eine konstruktive Integration des statorseitigen Lagerschildes mit dem Statorflansch durch eine Labyrithausführung zur Sicherstellung einer erhöhten Schutzart, da das statorseitige Lagerschild mit großen Öffnungen ausgeführt wird, um die Motorausnutzung deutlich zu erhöhen. Eine alternative bzw. weitere Verbesserungsmaßnahme zur Erhöhung der Motorausnutzung ist die Ausführung der beiden Lagerschilder statorseitig offen, rotorseitig geschlossen mit Kühlrippen, insbesondere hergestellt aus Alu.

In einer alternativen Ausführung ist eine gegossene Rotorglocke mit eingelegtem FE-Rückschlussring und angegossenen Kühlflügeln vorgesehen kombiniert mit einem statorseitigen Lagerschild mit Kühlflügel in offener Ausführung.

In einer ebenfalls bevorzugten Ausführungsform der Erfindung ist vorgesehen, dass in Radialrichtung betrachtet zwischen der Kühleinrichtung und Bereichen im Statorpaket, der für die Statorspulen vorgesehen ist, in Umlaufrichtung angebrachte elektrische Anschlussringe aufweisend Anschlussdrähte zur elektrischen Verbindung der Spulen vorgesehen sind. Besonders günstig ist es, wenn vier elektrische Anschlussringe für die Versorgung vorgesehen sind, so dass eine Versorgung mit den 3 Phasen L1, L2, L3 und dem Neutralleiter N ermöglicht werden.

Grundsätzlich sind alle offenbarten Merkmale beliebig kombinierbar, soweit dies technisch möglich und sinnvoll ist.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: einen Elektromotor in einer Schnittdarstellung;
- Fig. 2: eine perspektivische Ansicht auf einen Elektromotor mit der Ansichtseite des statorseitigen Lagerschilds;
- Fig. 3: eine Draufsicht auf die Kühleinrichtung zwischen der Welle und dem Statorpaket und
- Fig. 4: eine Draufsicht auf die Kühleinrichtung zwischen der Welle und dem Statorpaket

Im Folgenden wird die Erfindung anhand ausgewählter Ausführungsbeispiel näher erläutert, wobei gleiche Bezugszeichen strukturell oder funktional gleiche Teile in den Ansichten benennen.

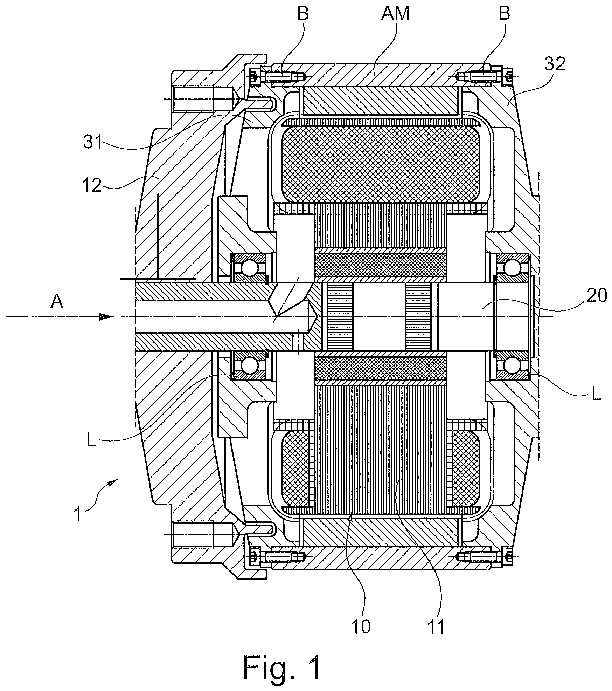

In Figur 1 ist ein erstes Ausführungsbeispiel des Elektromotors 1 ausgebildet als Außenläufermotor in einer Schnittansicht gezeigt. Der Elektromotor 1 ist ein Außenläufermotor mit einem Stator 10 mit einem Statorpaket 11 und einer drehfest angebrachten Welle 20, die sich in Axialrichtung A des Motors erstreckt.

Ferner ist eine Rotorglocke 30 vorgesehen, die gegenüber der drehfesten Welle 20 rotierbar angeordnet. Die Rotorglocke 30 besitzt einen rohrförmigen Außenmantel AM und ein statorseitiges Lagerschild 31, das am Außenmantel der Rotorglocke 30 mit Befestigungsmittel B befestigt ist. Das statorseitiges Lagerschild 31 ist mittels Lager L an der Welle 20 gelagert.

Wie in der Figur 1 weiter ersichtlich ist der Elektromotor 1 mit einem Statorflansch 12 versehen.

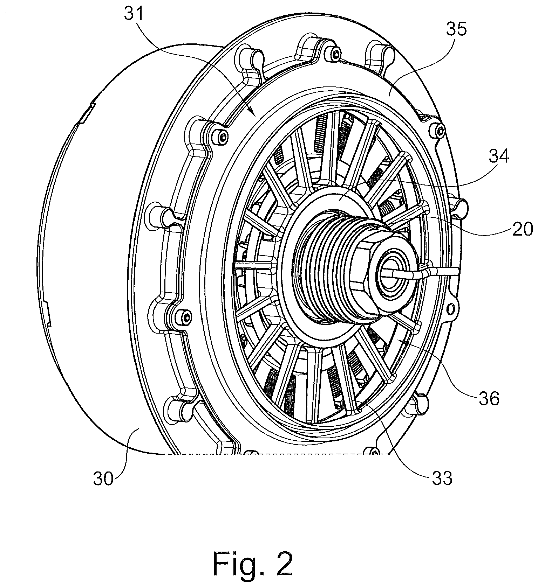

In der Figur 2 findet sich eine perspektivische Ansicht auf einen Elektromotor 1 mit der Ansicht auf das statorseitige Lagerschild 31.

Das statorseitigen Lagerschild 31 ist mit Kühlflügeln ausgebildet, die sich als radial verlaufende Speichen 33 zwischen einem zentralen Lagerabschnitt 34 und einem radial weiter außen liegenden Lagerschildabschnitt 35 erstrecken und zwischen den Speichen 33 sind Öffnungen 36 vorgesehen.

Am Ende der Welle 20 befindet sich ein weiteres Lager L an dem die Rotorglocke 30 über ein zweites und zwar rotorseitiges Lagerschild 32 drehbar gelagert ist. Das rotorseitige Lagerschild 32 ist ebenfalls über Befestigungsmittel B an der Rotorglocke 30 befestigt und weist eine geschlossene Struktur auf, um einen entsprechenden Schutz gegen Umwelteinwirkungen (z. B Schutzgrad IP 54) zu gewährleisten.

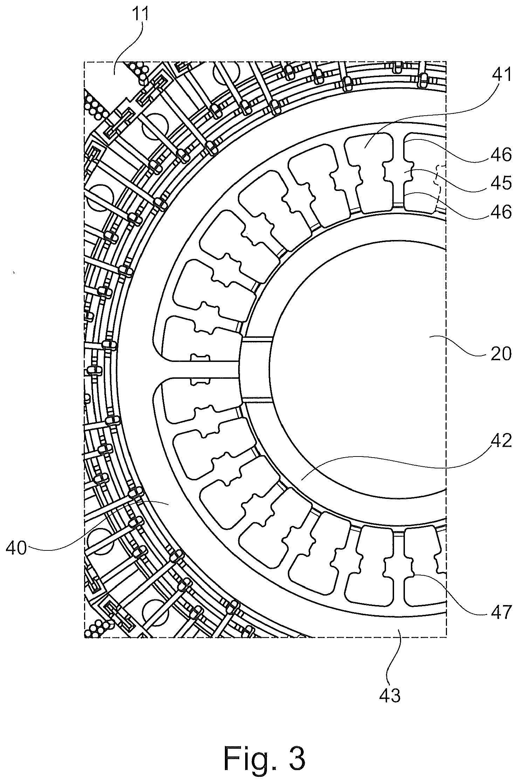

Zwischen der Welle 20 und dem Statorpaket 11 ist eine diese beiden Teile verbindende Kühleinrichtung 40 angeordnet ist. Diese ist konzeptionell so ausgestaltet, dass bei Drehung des Motors im Betrieb eine Kühlung auf den Stator bewirkt wird, indem die Kühleinrichtung 40 hierzu eine Vielzahl von axialen Strömungsöffnungen 41 angeordnet in Umfangsrichtung aufweist. Somit kann ein Luftstrom entlang dem Stator 10 bewirkt werden und eine effiziente Kühlung von innen her erzeugt werden. Das Design ist in der Figur 3 näher gezeigt. Die Kühleinrichtung 40 besitzt einerseits einen die Welle 20 verbindenden inneren Ring 42 sowie einen das Statorpaket 11 verbindenden äußeren Ring 43. Beide Ringe 42, 43 sind einstückig über stegförmige sich in Radialrichtung erstreckende Verbindungsabschnitte 44 miteinander verbunden. Bevorzugt ist das gewählte Material Aluminium oder eine Aluminiumlegierung.

Die Verbindungsabschnitte 44 besitzen einen zentralen Mittenabschnitt 45, der jeweils in Umfangsrichtung breiter ist im Vergleich zur Breite in den benachbarten sich an diesen Mittenabschnitt 45 jeweils beidseitig anschließende Stegabschnitte 46. Die beiden Seiten verlaufen bogenförmig nach innen gekrümmt und besitzen jeweils nasenförmige Eckvorsprünge 47.

Der effektive Querschnitt der Strömungsöffnungen 41 in Axialrichtung betrachtet ist größer, als der Querschnitt der radial zwischen den Strömungsöffnungen 41 befindlichen Bereichen. Somit wird eine gute und effiziente Strömung erreicht.

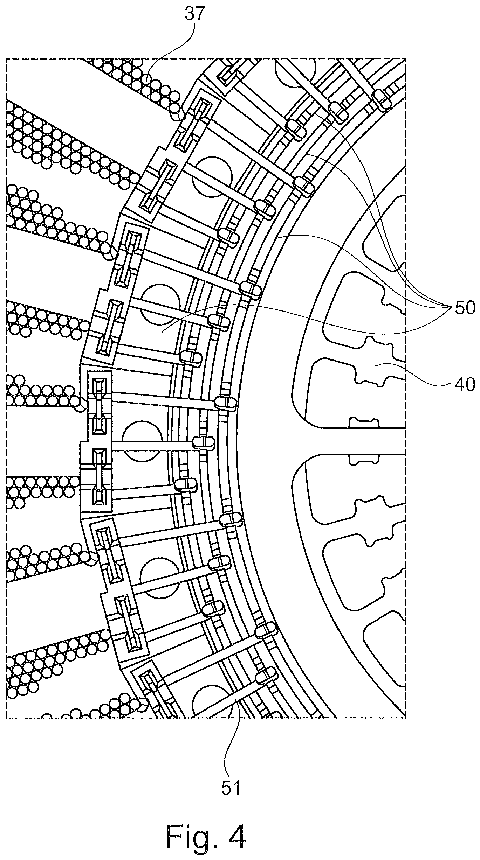

Wie in der Figur 4 ersichtlich, sind zwischen der Kühleinrichtung 40 und Bereichen im Statorpaket, die für die Statorspulen 37 vorgesehen sind, in Umlaufrichtung angebrachte elektrische Anschlussringe 50 aufweisend Anschlussdrähte 51 zur elektrischen Verbindung der Spulen 37 vorgesehen.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. So kann das Lagerschild 32 zum Beispiel auch integral mit der Rotorglocke 30 ausgebildet sein.

## Patentansprüche

1. Elektromotor (1), insbesondere Außenläufermotor, mit einem Stator (10) mit einem Statorpaket (11), einer drehfest angebrachten Welle (20), die sich in Axialrichtung (A) des Motors erstreckt und einer gegenüber der drehfesten Welle (20) rotierbar angeordneten Rotorglocke (30), wobei die Rotorglocke (30) ausgebildet mit Kühlrippen in offener, speichenförmiger Ausführung mittels wenigstens einem ersten statorseitigen Lagerschilds (31) drehbar an der Welle (20) gelagert ist und zwischen der Welle (20) und dem Statorpaket (11) eine diese verbindende Kühleinrichtung (40) angeordnet ist, welche bei Drehung des Motors im Betrieb eine Kühlung bewirkt, indem die Kühleinrichtung (40) hierzu eine Vielzahl von axialen Strömungsöffnungen (41) angeordnet in Umfangsrichtung aufweist.

2. Elektromotor nach Anspruch 1, **dadurch gekennzeichnet, dass** die Kühleinrichtung (40) einen die Welle (20) verbindenden inneren Ring (42) sowie einen das Statorpaket (11) verbindenden äußeren Ring (43) aufweist und einstückig mit dem inneren Ring (42) und dem äußeren Ring (43) stegförmige sich in Radialrichtung erstreckende Verbindungsabschnitte (44) ausgebildet sind.

3. Elektromotor nach Anspruch 1 oder 2, **dadurch gekennzeichnet, dass** die Verbindungsabschnitte (44) einen zentralen Mittenabschnitt (45) aufweisen, der jeweils in Umfangsrichtung breiter ist im Vergleich zur Breite in den benachbarten sich an diesen Mittenabschnitt (45) jeweils beidseitig anschließende Stegabschnitte (46).

4. Elektromotor nach einem der vorigen Ansprüche, **dadurch gekennzeichnet, dass** der Querschnitt der Strömungsöffnungen (41) in Axialrichtung betrachtet größer ist, als der Querschnitt der radial zwischen den Strömungsöffnungen (41) befindlichen Bereichen.

5. Elektromotor nach einem der vorigen Ansprüche, **dadurch gekennzeichnet, dass** die Rotorglocke (30) ein zweites und zwar rotorseitiges Lagerschild (32) entweder als separates Lagerschild oder integral mit der Rotorglocke ausbildet, mit dem die Rotorglocke (30) an der Welle (20) drehbar gelagert ist.

6. Elektromotor nach einem der vorigen Ansprüche, **dadurch gekennzeichnet, dass** das statorseitigen Lagerschilds (31) mit Kühlflügeln ausgebildet ist, die sich als radial verlaufende Speichen (33) zwischen einem zentralen Lagerabschnitt (34) und einem radial weiter außen liegenden Lagerschildabschnitt (35) erstrecken und zwischen den Speichen (33) Öffnungen (36) vorgesehen sind.

7. Elektromotor nach einem der vorigen Ansprüche, **dadurch gekennzeichnet, dass** ein Statorflansch (12) vorgesehen ist, an dem der Elektromotor oder der Stator (10) gelagert ist und das statorseitigen Lagerschilds (31) mit dem Statorflansch (12), insbesondere über eine Labyrinthdichtung verbunden ist.

8. Elektromotor nach einem der vorigen Ansprüche, **dadurch gekennzeichnet, dass** in Radialrichtung betrachtet zwischen der Kühleinrichtung (40) und Bereichen im Statorpaket, der für die Statorspulen (37) vorgesehen ist, in Umlaufrichtung angebrachte elektrische Anschlussringe (50) aufweisend Anschlussdrähte zur elektrischen Verbindung der Spulen vorgesehen sind.

9. Elektromotor nach Anspruch 8, **dadurch gekennzeichnet, dass** vier elektrische Anschlussringe für die Versorgung vorgesehen sind.
